# EUROPEAN PATENT APPLICATION

(11) **EP 2 535 712 A1**
(43) Date of publication of application: **19.12.2012**
(21) Application number: 11169994.8
(22) Date of filing: 15.06.2011
(51) Int. Cl.: G01N 33/543, G01N 35/10

(54) **Analytical system for the preparation of biological material**

(71) Applicant: F. Hoffmann-La Roche AG, 4070 Basel (CH); Roche Diagnostics GmbH, 68305 Mannheim (DE)
(72) Inventor: Zuppiger, Adelrich, 8854 Siebnen (CH); Burghardt, Géza, 6343 Rotkreuz (CH); Meyberg, Michael, 6343 Rotkreuz (CH); D'Amore, Alessandro, 5610 Wohlen (CH); Gut, Raphael, 6004 Luzern (CH)
(74) Representative: Herren, Barbara

(57) **Abstract**

The present invention relates to a system for the isolation of biological material, using binding particles for the separation and/or isolation of such material.

More precisely, the present invention relates to a system for the isolation of biological material comprised in a fluid sample, said system comprising
**•** a separation station (1) constructed and arranged to separate and purify said biological material from said fluid sample, said separation station comprising at least one receiving vessel (2)
**•** a reservoir (3) containing a suspension of binding particles (4) for the isolation of said biological material
**•** a pipetting device (5) comprising a pipettor (6) for transferring said suspension of binding particles
**•** a measuring device (7) for determining the relative or absolute quantity of said binding
particles or a portion thereof within said pipettor.

The present invention further provides a method for the isolation of biological material comprised in a fluid sample.

## Description

### Field of the invention

The present invention belongs to the field of sample preparation for analytical purposes, particularly the separation and/or isolation of biological materials such as nucleic acids or proteins in or from complex mixtures. Within that field, the present invention relates to a system providing binding particles for the separation and/or isolation of biological materials.

### Background of the invention

The isolation of biological materials such as nucleic acids or proteins from complex biological mixtures such as e.g. clinical samples has been of considerable significance especially for diagnostic purposes.

Numerous different methods have been developed in the art, e.g. denaturing, precipitating and removing undesired components in a sample with subsequent precipitation and isolation of the analyte in question.

Another approach is the binding of the biological material to be isolated to a solid support material which may be provided, e.g., in the form of chromatographic columns.

For diagnostic purposes, and especially for the automated isolation of biological materials subject to subsequent medium- or high-throughput analysis, binding particles are often used. Such particles can have functionalized surfaces, i.e. they are often coated with antibodies, nucleic acid capture probes or the like, in order to bind the desired analyte. Alternatively, they may have unmodified surfaces such as glass surfaces particularly for the non-specific isolation of nucleic acids.

Such binding particles are, in connection with automated analyzers, often provided as a suspension in a container from which they are retrieved and dispensed with the help of pipetting tools. One of the challenges in such setups is the even distribution of an essentially identical number of binding particles with each of the pipetting events, since it depends on several potential sources of error, e.g. inhomogeneous distribution of binding particles within the container, or variances in the aspiration of binding particles into the pipettor or pipet tip.

In the prior art there have been attempts to address this problem, e.g. withdrawal of an aliquot of suspension from a container and analyzing it outside the system, as disclosed in DE 2049463. The present invention provides an improved system for the isolation of biological material displaying several advantages as set out in the following.

### Summary of the invention

In a first aspect, the invention relates to a system for the isolation of biological material, using binding particles for the separation and/or isolation of such material.

More precisely, in a first aspect, the present invention relates to a system for the isolation of biological material comprised in a fluid sample, said system comprising
- a separation station (1) constructed and arranged to separate and purify said biological material from said fluid sample, said separation station comprising at least one receiving vessel (2)
- a reservoir (3) containing a suspension of binding particles (4) for the isolation of said biological material
- a pipetting device (5) comprising a pipettor (6) for transferring said suspension of binding particles
- a measuring device (7) for determining the relative or absolute quantity of said binding particles or a portion thereof within said pipettor.

Furthermore, the invention provides a method for the isolation of biological material comprised in a fluid sample, said method comprising the following steps:
a. withdrawing from a reservoir (3) a suspension of binding particles (4) for the isolation of said biological material by using a pipetting device (5) comprising a pipettor (6)
b. determining with a measuring device the relative or absolute quantity of said binding particles or a portion thereof within said pipettor
c. dispensing said suspension of binding particles into at least one receiving vessel (2) comprised by a separation station
d. separating and purifying said biological material from said fluid sample.

### Detailed description of the invention

The present invention relates to a system for the isolation of biological material, using binding particles for the separation and/or isolation of such material.

More precisely, in a first aspect, the present invention relates to a system for the isolation of biological material comprised in a fluid sample, said system comprising
- a separation station (1) constructed and arranged to separate and purify said biological material from said fluid sample, said separation station comprising at least one receiving vessel (2)
- a reservoir (3) containing a suspension of binding particles (4) for the isolation of said biological material
- a pipetting device (5) comprising a pipettor (6) for transferring said suspension of binding particles
- a measuring device (7) for determining the relative or absolute quantity of said binding particles or a portion thereof within said pipettor.

Prior art systems with a similar purpose exhibit various drawbacks:
For instance, particle density measurements within the binding particle reservoir are often not very reliable since such measurements are usually carried out at a certain defined point within the container, meaning that the measured value is a value specific for a specific place in the reservoir, while the particle density is not necessarily homogeneous throughout the whole suspension in the container. On the other hand, measures that are often taken in order to ensure said homogeneity can also be incompatible with measurement within the reservoir. For instance, the reservoir can be placed on a shaker which continuously moves said reservoir in order to resuspend potentially sedimented particles. Performing a measurement while the reservoir is moving might not be easily effected. Moreover, the reservoir might have to be opened during the measurement, such that - especially if the reservoir is open - parts of the suspension may be spilled.

Moreover, measurement within the receiving vessels - which are often also used as reaction vessels for analytical reactions such as, e.g., PCR - can be hampered by various factors, such as:
- The space within such a receiving vessel may be very limited (e.g. in the case of a multiwell plate).
- The receiving vessel or vessels may not be easily accessible for measuring devices, if they are e.g. located in an incubator.

The use of a measuring device for determining the relative or absolute quantity of said binding particles or a portion thereof within said pipettor brings about the advantage that the density of binding particles can be monitored during the pipetting procedure. This abolishes the problems that may arise in connection with measurements performed within the binding particle reservoir or the receiving vessels as discussed supra.

Furthermore, the system according to the present invention allows for reliable and quick measurements of the relative or absolute number of particles being transferred in the pipettor of the pipetting device.

The measurement is further performed during a transfer step which per se consumes time that is not directly used for analytical purposes. Thus, the measurement does not - or only in a reduced manner - take up additional time that could potentially be used for analysis.

Besides, the pipettor and thus also the binding particle suspension transported therein are usually easily accessible, since a pipetting device comprising a pipettor serves the purpose, among others, of transporting reagent components between different units of a system and therefore requires a certain amount of spatial freedom.

In the context of the present invention, the terms "isolation", "purification" or "extraction" of biological material relate to the following: Before biological material like nucleic acids may be analyzed in a diagnostic assay e.g. by amplification, they typically have to be purified, isolated or extracted from biological samples containing complex mixtures of different components. Often, for the first steps, processes are used which allow concentration of the material. To release the contents of cells or viral particles, they may be treated with enzymes or with chemicals to dissolve, degrade or denature the cellular walls or viral particles. This process is commonly referred to as lysis. The resulting solution containing such lysed material is referred to as lysate. A problem often encountered during lysis is that other enzymes degrading the component of interest, e.g. deoxyribonucleases or ribonucleases degrading nucleic acids, come into contact with the component of interest during the lysis procedure. These degrading enzymes may also be present outside the cells or may have been spatially separated in different cellular compartments prior to lysis. As the lysis takes place, the component of interest becomes exposed to said degrading enzymes. Other components released during this process may e.g. be endotoxins belonging to the family of lipopolysaccharides which are toxic to cells and can cause problems for products intended to be used in human or animal therapy.

There is a variety of means to tackle the above-mentioned problem. It is common to use chaotropic agents such as guanidinium thiocyanate or anionic, cationic, zwitterionic or non-ionic detergents when nucleic acids are intended to be set free. It is also an advantage to use proteases which rapidly degrade the previously described enzymes or unwanted proteins. However, this may produce another problem as said substances or enzymes can interfere with reagents or components in subsequent steps.

Enzymes which can be advantageously used in such lysis or sample preparation processes mentioned above are enzymes which cleave the amide linkages in protein substrates and which are classified as proteases, or (interchangeably) peptidases. Especially advantageous for the use in lysis or sample preparation processes mentioned above is the enzyme esperase, a robust protease that retains its activity at both high alkalinity and at high temperatures (EP 1 201 753).

In the sample preparation steps following the lysis step, the component of interest is further enriched.

For instance, a procedure for binding nucleic acids entails the selective binding of nucleic acids to glass surfaces of binding particles in chaotropic salt solutions and separating the nucleic acids from contaminants such as agarose, proteins or cell debris. To separate the glass particles from the contaminants, the particles may be either centrifuged or fluids are drawn through glass fiber filters. The use of magnetic particles to immobilize nucleic acids after precipitation by adding salt and ethanol is more advantageous and described e.g. in Alderton R. P. et al., S., Anal. Biochem. 201 (1992) 166-169 and PCT GB 91/00212. Magnetic, porous glass is also available that contains magnetic particles in a porous, particular glass matrix and is covered with a layer containing streptavidin. This product can be used to isolate biological materials, e.g., proteins or nucleic acids, if they are modified in a complex preparation step so that they bind covalently to biotin. Magnetizable particular adsorbents proved to be very efficient and suitable for automatic sample preparation. Ferrimagnetic and ferromagnetic as well as superparamagnetic pigments are used for this purpose.

A "fluid sample" is any fluid material that can be subjected to a diagnostic assay targeting nucleic acids and is in some embodiments derived from a biological source. In some embodiments, said fluid sample is derived from a human and is a body liquid. In an embodiment of the invention, the fluid sample is human blood or blood plasma, urine, sputum, sweat, swab, pipettable stool, or spinal fluid. In other embodiments, the fluid sample is human blood or blood plasma.

The terms "vessel", "receiving vessel" or "reaction vessel" comprise, but are not limited to, tubes or the wells of plates such as microwell, deepwell or other types of multiwell plates, in which a reaction for the analysis of the fluid sample such as e.g. reverse transcription or a polymerase chain reaction takes place. The outer limits or walls of such vessels are chemically inert such that they do not interfere with the analytical reaction taking place within.

In the case of multiple vessels, for the ease of handling and to facilitate automation, in some embodiments the vessels are combined in an integral arrangement, so they can be manipulated together.

Consequently, an aspect of the invention is the system described above, wherein multiple vessels are combined in an integral arrangement.

Integral arrangements can e.g. be vials or tubes reversibly or irreversibly attached to each other or arranged in a rack. In some embodiments, the integral arrangement is a multiwell plate. In some embodiments, the multiwell plate is a deepwell plate.

In the context of the invention, a "reservoir" means a container suitable for storing a suspension of binding particles. Such a reservoir can be made from different materials, comprising e.g. metal or plastics. If, for example, the container is made of plastic, its production process in some embodiments includes injection molding, such that e.g. fastenings may be introduced during the production steps. The container is in some embodiments made of polypropylene. As known to the person skilled in the art, a suitable molding tool is used for production of the reservoir.

In an embodiment of the invention, the reservoir comprises
- a suspension of binding particles (4) for the isolation of biological material
- inner walls (10) forming an elongate groove (11) at the bottom of said reservoir
- a cover (12) having openings (13) and/or being penetrable for a pipettor (6) comprising a linear arrangement of multiple pipets or pipet tips or pipetting needles (14), said openings being located above and parallel to said elongate groove.

In some embodiments, the reservoir is a suspension container as described above, wherein said inner walls are inclined in an angle to each other and thereby form said elongate groove.

In a method useful in the context of the present invention, the reservoir described supra is made in a two-step procedure. At first, the lower part of the container, i.e. the tray later containing the suspension, is made via a one-component injection molding process using polypropylene and a suitable molding tool. In another step, the cover is manufactured from two components, wherein first the basic form is made of polypropylene by injection molding, then the material forming a septum (e.g. rubber) is added to and combined with the cover.

"Binding particles for the isolation of biological material" are a solid phase on which biological material can be immobilized. The particles can comprise different materials and shapes. For example, particles such as e.g. beads with a diameter in the nano-, micro- or millimeter range can be suitable for binding biological material. "Biological material", in the sense of the invention, comprises all kinds of biological molecules, for example proteins or nucleic acids, but also other molecules occurring in nature or being derivatives or synthetic analogues or variants thereof. Furthermore, the term "biological material" comprises viruses and eukaryotic and prokaryotic cells. Often such cells or viruses are bound to said binding particles via biomolecules, especially proteins, that are present in their respective cell membrane or capsid. For the purpose of binding biological material, it is often advantageous to modify the surface of said binding particles by coating them with biomolecules with a specific or non-specific affinity to the biological material to be bound. As an example, such a coating can comprise streptavidin which specifically binds to biotin. The latter is often chemically attached to biomolecules in order to bind them to streptavidin-comprising surfaces such as a surface of respectively modified binding particles. For the same purpose, interactions between histidine tags and nickel or between antibodies and their antigens or epitopes can be exploited. In the context of nucleic acids as a biological material to be bound, so-called capture probes can be advantageously used. These capture probes are nucleic acids themselves, mostly oligonucleotides, often with a length of about 15 to 25 nucleotides, that bind to essentially complementary nucleic acid sequences by Watson-Crick base-pairing. Methods comprising binding particles coated with specific binders have the advantage that a specific biological material, such as a specific protein or nucleic acid, can be isolated while other proteins or nucleic acids are not bound. The skilled artisan understands that there is a variety of interactions between biological material and specific coatings of binding particles that can be used within the spirit of the invention. Methods for coating such binding particles are described in the prior art.

In some embodiments of the invention, the binding particles are magnetic particles. Particles, according to the expert, are solid materials having a small diameter. Particles like these are often also referred to as pigments. In some embodiments of the present invention, the particles can have an average particle size of less than 100 um. In some embodiments they have an average particle size of between 10 and 60 um. The distribution of particle size is in some embodiments relatively homogeneous.

Those materials are referred to as magnetic that are drawn to a magnet, i.e., ferromagnetic or superparamagnetic materials, for instance. In addition, those materials that are called softly magnetic are also understood to be magnetic, e.g., ferrites. In some embodiments of the present invention the binding particles are made of ferromagnetic materials, especially if they have not yet been premagnetized. Premagnetization in this context is understood to mean bringing in contact with a magnet and thereby increasing the remanence. In some embodiments, the binding particles are made of magnetite.

Particularly interesting for nucleic acid extraction purposes is their adsorption to a glass surface although other surfaces are possible. If unmodified nucleic acids are the target, a direct binding of the nucleic acids to a material with a silica surface such as e.g. glass is preferred because, among other reasons, the nucleic acids do not have to be modified, and even native nucleic acids can be bound. These processes are described in detail by various documents, e.g. in Vogelstein B. et al., Proc. Natl. Acad. USA 76 (1979).

An aspect of the invention is the system described above, wherein said binding particles comprise nucleic acid binding particles, for example magnetic glass particles. In some embodiments, said binding particles are magnetic glass particles, in some embodiments produced by the sol-gel method and/or having an unmodified glass surface, such as those described in WO 01/37291. In brief, these magnetic glass particles are a solid dispersion of small magnetic cores in glass.

In some embodiments, the glass of the particles is formed using the gel sol process described in WO 96/41811 and then dried and compressed.

A "separation station" is a device or a component of an analytical system allowing for the isolation of biological material from the other material present in the fluid sample. Such a separation station comprise, for example, a magnet or other suitable components. In an embodiment of the invention, the separation station comprises one or more magnets. In some embodiments, one or more magnets are used for the separation of magnetic particles, in some embodiments magnetic glass particles, as binding particles. If, for example, the fluid sample and the solid support material are combined together in the wells of a multiwell plate, then one or more magnets comprised by the separation station can e.g. be contacted with the fluid sample itself by introducing the magnets into the wells, or said one or more magnets can be brought close to the outer walls of the wells in order to attract the magnetic particles and subsequently separate them from the surrounding liquid.

The "pipetting device comprising a pipettor" is a tool that accomplishes aspirating and dispensing the suspension of binding particles and in some embodiments also e.g. reagents or samples, and thus transferring them between the other different components of said system. In the case of the suspension of binding particles, the pipetting device comprising a pipettor mediates the transfer from the reservoir to the receiving vessel or vessels. The pipetting device can comprise e.g. a robotic device with a movable robotic arm. Within an automated system, a pipetting device often comprises an actuator such as a motor, allowing for precise and reproducible movements.

In this context, the "pipettor" can e.g. comprise or be a pipet or an assembly of multiple pipets or pipetting needles, such as for example a multichannel pipet. In some embodiments, the pipettor contains an upper part that is attached to a holder, and a lower part comprising one or more pipets or pipetting needles. In the context of the invention, in some embodiments the pipettor comprises pipetting needles. In the case of a pipet, said pipet in some embodiments comprises one or more disposable pipet tips into which said suspension is aspirated and from which it is dispensed again. Such pipet tips can be used several times before being discarded and replaced. Disposable pipet tips useful for the invention in some embodiments have a volume of at least 10 µl, or at least 15 µl, or at least 100 µl, or at least 500 µl, or at least 1 ml, or about 1 ml.

A "measuring device" in the context of the invention is a device for the determination of a certain property of an object. In the system according to the invention, said measuring device is constructed and arranged to determine the relative or absolute quantity of the binding particles or a portion thereof within the pipettor.

In an embodiment of the invention, the system according to the invention is the system described above, wherein the measuring device is a device for measuring a physical property of said binding particles or said suspension of binding particles.

In this context, a "physical property" is an inherent, measurable property of said binding particles or said suspension of binding particles. Such a physical property can e.g. be, but is not limited to, inductivity, electromagnetic susceptibility, optical density, refraction, weight/mass, the influence of said binding particles or said suspension of binding particles on a magnetic field or other properties.

In an embodiment of the invention, the system described above comprises a measuring device for measuring the influence of said binding particles or said suspension of binding particles on a magnetic field.

It is known to the skilled person how this parameter can be measured. Some examples in the prior art are given e.g. in CA 2,342,023.

An advantageous means for measuring the influence of said binding particles or said suspension of binding particles on a magnetic field is the use of a conductive coil. Therefore, an aspect of the invention is the system described above, wherein said measuring device comprises a conductive coil. Such a coil has in some embodiments the shape of a ring coil, a flat coil or a solenoid coil. The coil is in some embodiments made of a temperature-insensitive material such as, e.g., constantan.

When the pipettor or a part thereof is introduced into the magnetic field in the inner space of a conductive coil, and said pipettor or said part thereof contains ferromagnetic or paramagnetic binding particles, then the inductivity of said conductive coil is increased. Suitable methods for measuring inductivity are known to the person skilled in the art and comprise, among other methods, the measurement of
- the curve progression following a step response
- the resonance shifting in an LC oscillator
- the phase shifting in an LR combination.

In some embodiments, in the system according to the invention, the measuring device of the system described supra determines the relative or absolute quantity of said binding particles or a portion thereof within a pipetting needle or a pipet tip.

Such a determination can comprise the steps of:
- Measuring the inductivity of the conductive coil before aspiration of the suspension of binding particles and/or the introduction of the pipetting needle or pipet tip into the inner space of said coil
- Aspiring suspension and measuring the inductivity of the conductive coil with said suspension in the pipetting needle or pipet tip while said pipetting needle or pipet tip is located in the inner space of said coil, wherein the measurement is in some embodiments carried out during about 1 sec
- Calculating the difference between the inductivity values before and after aspiration
- Calculating the relative or absolute number of beads using a suitable calibration curve.

In another embodiment, the measuring device further comprises a second conductive coil (15) serving as a reference. In said second conductive coil, no pipettor or part thereof is introduced. Measurement of the inductivity of said second conductive coil serves as a reference point and brings about the advantage that possible background noise (e.g. due to temperature influence) can be filtered by subtracting the measured value of said second coil from the measured value of the first coil.

Therefore, an aspect of the invention is the system described above, wherein said measuring device further comprises a second conductive coil serving as a reference point.

It is advantageous if the first and the second coil belong to the same circuit.

Both the limited space available within a pipettor, e.g. in a pipetting needle or a disposable or reusable pipet tip and the relatively short time during which the binding particles remain therein reduce the risk of an inhomogeneous particle distribution as compared, e.g., to the situation within a binding particle reservoir.

In some embodiments, the measuring device is connected to the pipetting device comprising the pipettor. Also in some embodiments, the measuring device is physically attached to the pipettor.

For instance, if the measuring device comprises or is a conductive coil as described supra, in some embodiments said coil is wound around the pipettor or a part thereof, e.g. around the pipetting needle or disposable or reusable pipet tip. In a further embodiment, said coil is wound around the shaft of the pipettor above said pipet tip or said pipetting needle.

The above-mentioned embodiments enable the skilled artisan to carry out surveillance or control of the binding particle distribution without the need of a further, separate measuring device. In this context, the pipettor need not be transferred to a separate measuring device, but the measurement may, in an embodiment, be performed during the transfer of the pipettor from the reservoir to the receiving vessel or vessels. In some embodiments, said measurement is carried out during aspiration and/or dispensing of the binding particles by the pipetting device comprising a pipettor. In such embodiments, no additional time is consumed since the measurement can be done in parallel to other essential steps.

Therefore, an aspect of the invention is the system described above, wherein said conductive coil is comprised by said pipettor.

Another aspect of the invention is the system described above, wherein said conductive coil is adapted to reversibly receive said pipettor within its internal space.

In this latter embodiment, the coil can be stationary and is not permanently connected to the pipettor. This bears the advantage that the measuring device comprising the coil can also be locally fixed and need not be mobile, which can contribute to the ease of construction of the system according to the invention. Such an embodiment is especially advantageous if the measurement is, e.g., not conducted in connection with each pipetting step, but rather serves as a spot test in order to ensure homogeneity of the binding particle suspension in the reservoir. In this embodiment, the conductive coil need only be brought into contact with the pipettor during the actual measurement.

In the case of multiple receiving vessels, for the ease of handling and to facilitate automation, in some embodiments the vessels mentioned above are combined in an integral arrangement, so that they can be manipulated together.

Consequently, an aspect of the invention is the system described above, wherein the vessels are combined in an integral arrangement.

Integral arrangements can e.g. be vials or tubes reversibly or irreversibly attached to each other or arranged in a rack. In some embodiments, the integral arrangement is a multiwell plate. Also in some embodiments, the multiwell plate is a deepwell plate.

A yet further aspect of the invention is the system described above, said system further comprising one or more elements selected from the group consisting of:
- a reaction module containing the components of a chemical and/or biochemical reaction
- a detection module for detecting signals evoked by an analyte
- a storage module for reagents and/or disposables.

A "reaction module" is a module in which a reaction such as Polymerase Chain Reaction (PCR) or hybridization of antibodies for the analysis of the sample or a specific analyte therein takes place. It can e.g. comprise a variety of vessels like tubes or plates. The outer limits or walls of such vessels are chemically inert such that they do not interfere with the analytical reaction taking place within.

A "detection module" is a module in which the detection of a signal, in some embodiments the signal evoked by an analyte or a control, is performed. A detection module can e.g. be an optical detection unit for detecting the result or the effect of the analysis procedure. An optical detection unit may comprise a light source, e.g. a xenon lamp, optics such as mirrors, lenses, optical filters, fiber optics for guiding and filtering the light, one or more reference channels, or a CCD camera.

A "storage module" stores the necessary reagents to bring about a chemical or biological reaction important for analysis of the sample in question. It can also contain further components useful for the method of the invention, e.g. disposables such as pipet tips or vessels to be used as reaction receptacles within the reaction module.

In some embodiments, the analytical system according to the invention further comprises a control unit for controlling system components.

A control unit may comprise software for ensuring that the different components of an analytical system work and interact correctly and with the correct timing, e.g. moving components such as e.g. the pipetting device comprising a pipettor in a coordinated manner. The control unit may also comprise a processor running a real-time operating system (RTOS), which is a multitasking operating system intended for real-time applications. In other words the system processor is capable of managing real-time constraints, i.e. operational deadlines from event to system response regardless of system load. It controls in real time that different units within the system operate and respond correctly according to given instructions.

A further aspect of the present invention is a method for the isolation of biological material comprised in a fluid sample, said method comprising the following steps:
a. withdrawing from a reservoir (3) a suspension of binding particles (4) for the isolation of said biological material by using a pipetting device (5) comprising a pipettor (6)
b. determining with a measuring device the relative or absolute quantity of said binding particles or a portion thereof within said pipettor
c. dispensing said suspension of binding particles into at least one receiving vessel (2) comprised by a separation station
d. separating and purifying said biological material from said fluid sample.

The method described above is particularly advantageous when used in connection with multiple receiving vessels, since in this case there is usually a need for the homogeneous distribution of at least similar, in some embodiments essentially identical, in yet other embodiments identical numbers of binding particles into the receiving vessels, such that step d. can be carried out in a controlled manner which is in some embodiments essentially the same for the different receiving vessels. For monitoring the homogeneous distribution described above, it can be sufficient to determine the relative number of binding particles in each step, since a lack of variation regarding this parameter is indicative of a homogeneous distribution. Determination of the relative number of binding particles also enables the skilled person to take appropriate measures in case homogeneity is not or not sufficiently given. For instance, if different relative numbers of binding particles are measured in the different tips of a multichannel pipettor, the person skilled in the art is given the opportunity to postpone the dispensing step, mix the suspension within the container and repeat the aspiration step in order to achieve a more even distribution of binding particles throughout the pipet tips and consequently throughout the receiving vessels.

Still, in the case where only one receiving vessel is used, the method according to the invention is useful, especially if the absolute number of binding particles is determined. This value can e.g. be saved on an electronic medium or otherwise recorded for comparison with other, e.g. independent experiments. Determination of the absolute number of binding particles often requires certain calculation steps. For example, if the influence of the binding particles on a magnetic field is measured, the latter is dependent on the content of magnetic material among said particles. Therefore, if each of the particles has essentially the same content of magnetic material, then the measuring device may be appropriately calibrated using standard material with a known number of magnetic particles. Using this calibration, the absolute number of binding particles may be determined.

In view of the advantages discussed above in the context of the system according to the invention, an aspect is the method described supra, wherein step b. comprises determining the relative or absolute quantity of said binding particles or a portion thereof within said pipettor (6) by measuring the influence of said binding particles or said suspension of binding particles on a magnetic field..

In an embodiment of the invention, step b. is done at the same time as step c. Performing the quantity measurement during the dispensing in step c. avoids the need to include a separate and potentially time-consuming additional measuring step. The measurement can be done in parallel.

For the reasons discussed above in the context of the system according to the invention, an aspect is the method described supra, wherein the measuring device comprises a conductive coil.

As also discussed in the context of the system according to the invention, the measuring device, in particular the conductive coil can either be connected to the pipetting device comprising the pipettor or the pipettor itself, respectively, or it can be separate and e.g. stationary, such that the pipettor or a part thereof, especially a pipetting needle, a pipet shaft or a pipet tip are temporarily introduced into the internal space of the coil in order to conduct the measurements. The advantages of such embodiments are discussed above.

Thus, an aspect of the invention is the method described above, wherein step b. further comprises introducing said pipettor (6) or a part thereof into the internal space of said conductive coil (7) such that said pipettor and its contents including the suspension of binding particles are exposed to the electromagnetic field of said conductive coil.

In such an embodiment, it is still possible that certain steps of the above-mentioned method are combined or done in parallel. In particular, in some embodiments, during the dispensing in step c. the pipettor or a part thereof is still located within the internal space of said conductive coil such that said pipettor and its contents including the suspension of binding particles are exposed to the electromagnetic field of said conductive coil.

This allows monitoring of the dispensing step itself.

In another embodiment, the measuring device comprising said coil and the receiving vessels are spatially separate from each other, such that the pipettor or a part thereof is removed from the coil and then transferred to the receiving vessels, where the dispensing takes place. Such an embodiment can e.g. have practical advantages, if for instance the measuring device and/or the receiving vessel or vessels or any units holding these vessels are bulky.

Thus, an aspect of the invention is the method described above, further comprising between step b. and step c. the step of removing said pipettor from the internal space of said conductive coil.

After isolation of the biological material, in some embodiments, the purified biological material is subsequently analyzed after step d. Such analyses can have numerous different purposes, such as e.g. the detection of organisms, biomolecules or both in biological samples. One important application is the diagnosis of clinical samples comprising or consisting of body fluids from individuals, such as e.g. blood or blood plasma samples.

In this context, various assays are available and known to the person skilled in the art and described elsewhere. In the context of the present invention, in some embodiments the biological material is a nucleic acid.

In this case, methods for analysis are preferred that comprise the amplification of said nucleic acids, such that even very small amounts of nucleic acids can be detected.

A method of nucleic acid amplification is the Polymerase Chain Reaction (PCR) which is disclosed, among other references, in U.S. Patent Nos. 4,683,202, 4,683,195, 4,800,159, and 4,965,188.

Other nucleic acid amplification methods to be used in the context of the invention comprise the Ligase Chain Reaction (LCR; Wu D. Y. and Wallace R. B., Genomics 4 (1989) 560-69; and Barany F., Proc. Natl. Acad. Sci. USA 88 (1991)189-193); Polymerase Ligase Chain Reaction (Barany F., PCR Methods and Applic. 1 (1991) 5-16); Gap-LCR (WO 90/01069); Repair Chain Reaction (EP 0439182 A2), 3SR (Kwoh D.Y. et al., Proc. Natl. Acad. Sci. USA 86 (1989) 1173-1177; Guatelli J.C., et al., Proc. Natl. Acad. Sci. USA 87 (1990) 1874-1878; WO 92/08808), and NASBA (US 5,130,238). Further, there are strand displacement amplification (SDA), transcription mediated amplification (TMA), and Qb-amplification (for a review see e.g. Whelen A. C. and Persing D. H., Annu. Rev. Microbiol. 50(1996) 349-373; Abramson R. D. and Myers T. W., Curr Opin Biotechnol 4 (1993) 41-47).

It is to be understood that disclosed embodiments described for the system of the invention also apply to the method according to the invention.

### Description of the figures

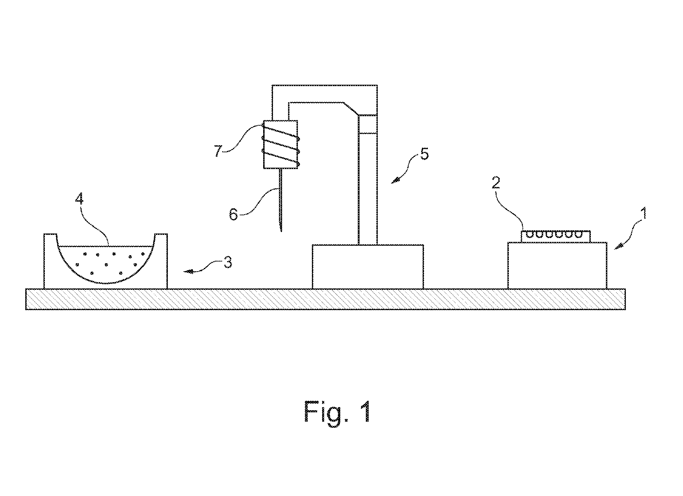

Fig.1: Schematic side view of an embodiment of the system according to the invention
   This scheme shows a system with a separation station (1) comprising receiving vessels (2) in the form of a microwell plate. On the left hand side, a reservoir (3) containing a suspension of binding particles (4) is depicted. Between these components, a pipetting device (5) is located comprising a pipettor (6). In this embodiment, a measuring device (7) in the form of a conductive coil is attached to the pipettor. The pipettor is movable by means of the pipetting device such as to transfer the suspension between the different aforementioned units.

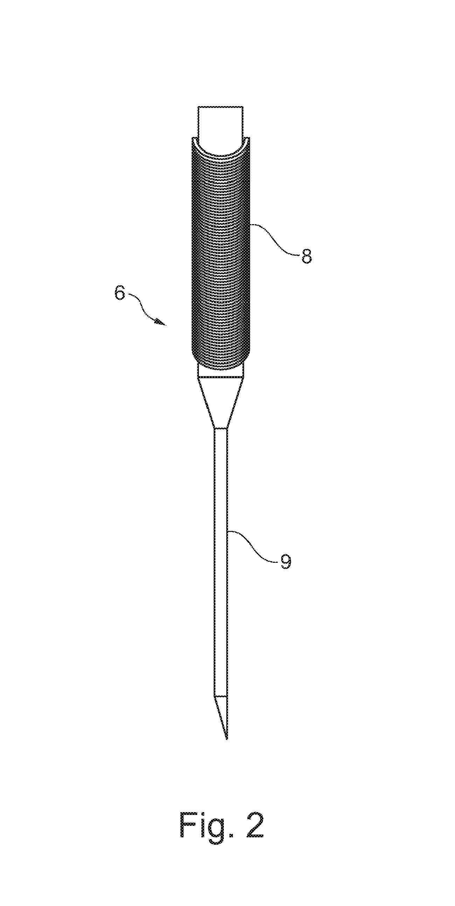

Fig.2: Perspective view of a pipettor (6) This depiction shows a pipettor (6) with a pipetting needle (9) serving for aspirating and dispensing liquids and/or suspensions. A part of the pipettor is surrounded by a conductive coil (8) belonging to a measuring device.

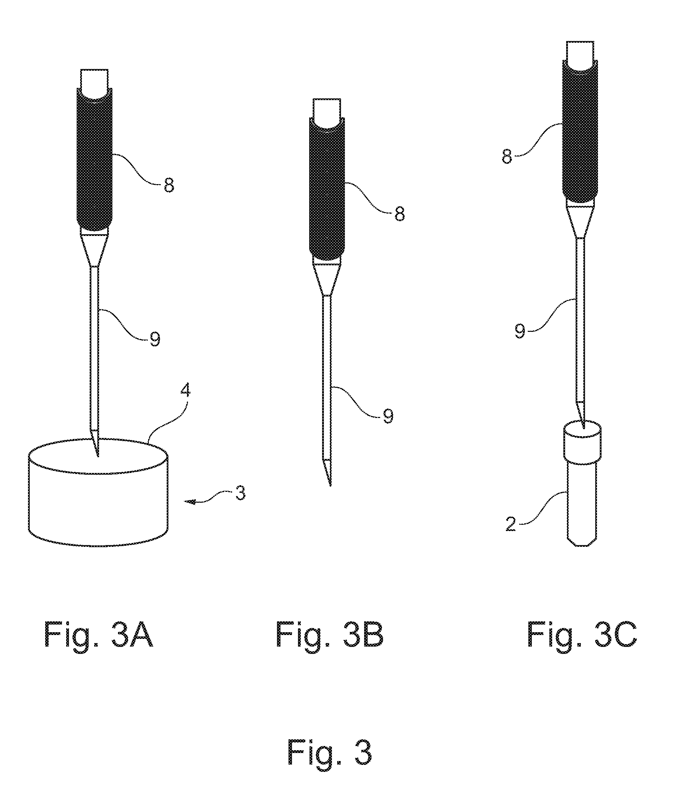

Fig.3: Perspective depiction of a pipetting event with a coil attached to the pipettor
   In Fig 3A, the pipettor (6) from Fig.1 is shown above a reservoir (3) containing a suspension of binding particles (4), corresponding to the step of aspiring suspension with said pipettor.
   Fig 3B shows the pipet between aspiration and dispensing, and
   Fig 3C depicts the step of dispensing the aspired suspension into a receiving vessel (2)
   The measurement via the conductive coil (8) can be done at any one, more than one or all of the steps, since it is permanently attached to the pipettor.

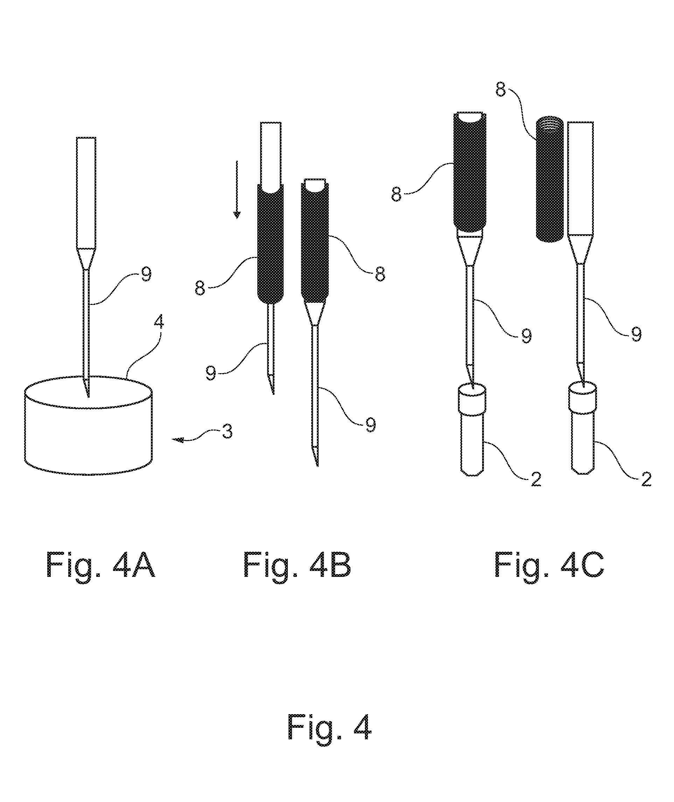

Fig.4: Perspective depiction of a pipetting event with separate coil
   In Fig.4A, a pipettor (6) aspiring a suspension of binding particles (4) from a reservoir (3) through its pipetting needle (9) without a conductive coil or other measuring means is shown.
   Fig 4B shows the pipet between aspiration and dispensing, while it is introduced (see arrow) into the inner space of a separate conductive coil (8), such that the respective measurement can take place.
   In Fig 4C, two different variants of dispensing are depicted: On the left hand side, the dispensing into the receiving vessel (2) takes place while the pipettor is still located in the internal space of the coil (8), whereas on the right hand side the pipettor has been removed from said coil before dispensing.

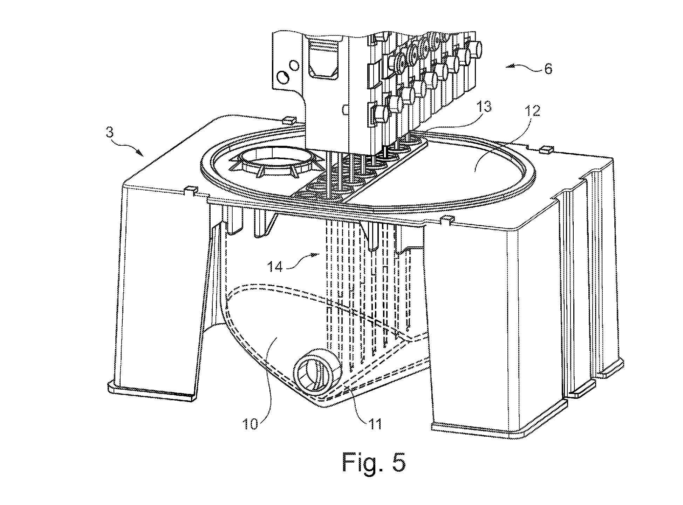

Fig.5: Perspective view of a reservoir for a binding particle suspension during aspiration by the pipettor
   This depiction shows a reservoir (3) having inner walls (10) forming an elongate groove (11) at the bottom of said reservoir, and a cover (12) having openings (13) and/or being penetrable for a pipettor (6) comprising a linear arrangement of multiple pipetting needles (14), said openings being located above and parallel to said elongate groove.
   The reservoir's inner walls (10) are inclined in an angle to each other and thereby form said elongate groove (11).
   The pipettor (6) comprises a linear arrangement of multiple pipetting needles (14) which in this depiction penetrate the cover (12) in order to aspire binding particle suspension (not shown) from the elongate groove at the bottom of the reservoir.

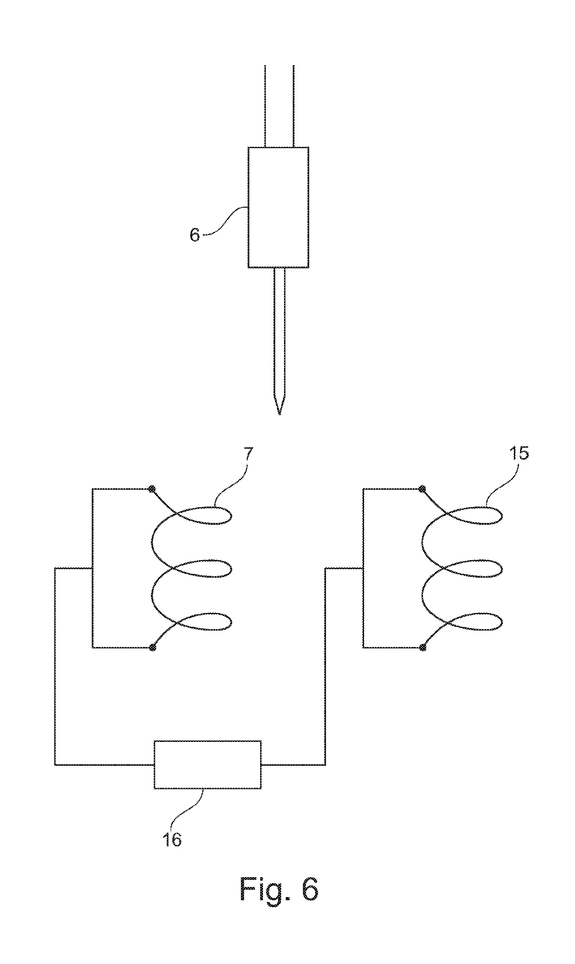

Fig.6: Schematic side view of an embodiment of the system of the invention comprising a reference coil
   This depiction shows a pipettor (6) that is about to be introduced in the inner space of a conductive coil (7) belonging to a measuring device, the latter further comprising a second conductive coil (15) serving as a reference. The respective inductivity of the first coil (7) and the second coil (15) is measured with the help of a measuring unit (16) of the measuring device. The arrow indicates the direction of movement of the pipettor (6).

## Claims

1. A system for the isolation of biological material comprised in a fluid sample, said system comprising
• a separation station (1) constructed and arranged to separate and purify said biological material from said fluid sample, said separation station comprising at least one receiving vessel (2)
• a reservoir (3) containing a suspension of binding particles (4) for the isolation of said biological material
• a pipetting device (5) comprising a pipettor (6) for transferring said suspension of binding particles
• a measuring device (7) for determining the relative or absolute quantity of said binding particles or a portion thereof within said pipettor.

2. The system of claim 1, wherein said measuring device is a device for measuring a physical property of said binding particles or said suspension of binding particles.

3. The system of claim 2, wherein said measuring device is a device for measuring the influence of said binding particles or said suspension of binding particles on a magnetic field.

4. The system of any of the preceding claims, wherein said measuring device comprises a conductive coil (8).

5. The system of claim 4, wherein said conductive coil is comprised by said pipetting device comprising a pipettor.

6. The system of claim 4, wherein said conductive coil is adapted to reversibly receive said pipettor within its internal space.

7. The system of any of the preceding claims, wherein said measuring device determines the relative or absolute quantity of said binding particles or a portion thereof within a pipetting needle (9) or a pipet tip.

8. The system of any of the preceding claims, wherein the measuring device further comprises a second conductive coil serving as a reference.

9. A method for the isolation of biological material comprised in a fluid sample, said method comprising the following steps:
a. withdrawing from a reservoir (2) a suspension of binding particles (3) for the isolation of said biological material by using a pipetting device comprising a pipettor (4)
b. determining with a measuring device the relative or absolute quantity of said binding particles or a portion thereof within said pipettor
c. dispensing said suspension of binding particles into at least one receiving vessel (1) comprised by a separation station
d. separating and purifying said biological material from said fluid sample.

10. The method of claim 9, wherein step b. comprises determining the relative or absolute quantity of said binding particles or a portion thereof within said pipettor (4) by measuring the influence of said binding particles or said suspension of binding particles on a magnetic field..

11. The method of any of the claims 9 to 10, wherein the measuring device comprises a conductive coil (5).

12. The method of claim 11, wherein step b. further comprises introducing said pipettor (4) or a part thereof into the internal space of said conductive coil (5) such that said pipettor and its contents including the suspension of binding particles are exposed to the electromagnetic field of said conductive coil.
